# EUROPEAN PATENT APPLICATION

(11) **EP 4 793 774 A1**
(43) Date of publication of application: **19.08.2026**
(21) Application number: 24876183.5
(22) Date of filing: 29.07.2024
(51) Int. Cl.: G06F 11/07, G06F 9/50

(54) **INFORMATION ACQUISITION METHOD AND APPARATUS, ELECTRONIC DEVICE, AND COMPUTER-READABLE STORAGE MEDIUM**

(30) Priority: 09.10.2023 CN 202311307335
(71) Applicant: Shenzhen TCL New Technology Co., Ltd., Shenzhen, Guangdong 518052 (CN)
(72) Inventor: YAN, Haiqun, Shenzhen, Guangdong 518052 (CN)
(74) Representative: Herrero & Asociados, S.L.
(86) International application number: PCT/CN2024/108087
(87) International publication number: WO 2025/077363

(57) **Abstract**

Embodiments of the present disclosure introduce an information acquisition method, including: determining a first process identifier corresponding to a target application; creating a second process using a first process corresponding to the first process identifier; adjusting a scheduling group of the second process to obtain a third process; and dumping, using the third process, data in the memory. This method may enable the dumping of memory snapshot information when an application exception occurs.

## Description

The present disclosure claims the priority of the Chinese patent application titled "INFORMATION ACQUISITION METHOD AND APPARATUS, ELECTRONIC DEVICE, AND COMPUTER-READABLE STORAGE MEDIUM", with application number 202311307335.3, submitted to the China National Intellectual Property Administration on October 9, 2023, the entire content of which is incorporated herein by reference.

### TECHNICAL FIELD

The present disclosure generally relates to computer technology, and in particular to an information acquisition method, an apparatus, an electronic device, and a computer-readable storage medium.

### BACKGROUND

Currently, when an application experiences an exception in a native Android system, the cause of the exception is often analyzed by acquiring memory snapshot information at the time of the exception.

### Technical Problem:

Currently, the acquisition of memory snapshot information depends on the state of the application. For example, threads of the application need to be frozen to acquire the memory snapshot information, and the running state of the threads can only be resumed after the acquisition is complete. This causes a long-term blockage of the application's operation.

### SUMMARY

Embodiments of the present disclosure provide an information acquisition method, an apparatus, an electronic device, and a computer-readable storage medium, for acquiring memory snapshot information when an application exception occurs and reducing blockage of the application's operation.

An embodiment of the present disclosure provides an information acquisition method. The method includes: in response to detecting that a target application meets a preset trigger condition, determining a first process identifier corresponding to the target application, wherein the preset trigger condition comprises at least one of: the target application lagging, the target application freezing, or an out-of-memory condition in a memory corresponding to the target application; creating a second process using a first process corresponding to the first process identifier, wherein the second process is a child process of the first process, and the second process and the first process share the memory corresponding to the target application; adjusting a scheduling group of the second process to obtain a third process, wherein the third process is independent of the first process; and dumping, using the third process, data in the memory.

Correspondingly, an embodiment of the present disclosure also provides an information acquisition apparatus. The apparatus includes: a determining module, configured to, in response to detecting that a target application meets a preset trigger condition, determine a first process identifier corresponding to the target application, wherein the preset trigger condition comprises at least one of: the target application lagging, the target application freezing, or an out-of-memory condition in a memory corresponding to the target application; a creating module, configured to create second process using a first process corresponding to the first process identifier, wherein the second process is a child process of the first process, and the second process and the first process share the memory corresponding to the target application; an adjusting module, configured to adjust a scheduling group of the second process to obtain a third process, wherein the third process is independent of the first process; and a dumping module, configured to dump, using the third process, data in the memory.

In some embodiments of the present disclosure, the adjusting module includes: an adjusting unit, configured to adjust the second process from a first control group to a second control group to obtain the third process, wherein the first control group is a control group corresponding to the first process.

In some embodiments of the present disclosure, the dumping module includes: a first determining unit, configured to determine a time point at which the preset trigger condition is met; a second determining unit, configured to determine, based on a preset time interval, a target collection time interval with the time point as a collection reference; a third determining unit, configured to identify a file located in the target collection time interval in the memory as a target file; and a dumping unit, configured to dump the target file.

In some embodiments of the present disclosure, the creating module includes: a creating unit, configured to create the second process using the first process corresponding to the first process identifier according to a memory identifier of the memory.

In some embodiments of the present disclosure, the apparatus further includes an application process control module, the application process control module including: a first processing unit, configured to freeze threads of the first process corresponding to the first process identifier; and a second processing unit, configured to, after the second process is created by using the first process corresponding to the first process identifier, restart the threads.

In some embodiments of the present disclosure, the apparatus further includes a sending module, the sending module including: a first sending unit, configured to send, by the third process to the first process, a dump completion notification message for notifying the first process that dumping of the data in the memory is completed; and a second sending unit, configured to, in response to detecting that the threads of the first process have completed restarting, send, by the third process to the first process, the dump completion notification message.

In some embodiments of the present disclosure, the apparatus further includes a memory analysis module, the memory analysis module including: a memory analysis unit, configured to call a memory analysis tool to analyze the dumped file to obtain a memory detection result, wherein the memory detection result includes at least memory usage of each thread in the first process.

In a third aspect, an embodiment of the present disclosure also provides an electronic device. The electronic device includes a memory, a processor, and a computer program stored on the memory and executable by the processor, wherein when the computer program is executed by the processor, the processor is caused to perform the steps of the information acquisition method described above.

In a fourth aspect, an embodiment of the present disclosure also provides a computer-readable storage medium storing a computer program thereon, wherein when the computer program is executed by a processor, the processor is caused to perform the steps of the information acquisition method described above.

In a fifth aspect, an embodiment of the present disclosure also provides a computer program product or a computer program, wherein the computer program product or the computer program comprises computer instructions stored on a computer-readable storage medium. A processor of a computer device reads the computer instructions from the computer-readable storage medium, and the processor executes the computer instructions, causing the computer device to perform the methods provided in the various optional implementations described in the embodiments of the present disclosure.

### Beneficial Effects:

According to embodiments of the present disclosure, if it is detected that a target application meets a preset trigger condition, a first process identifier corresponding to the target application is determined. The trigger condition includes the target application lagging, freezing, or an out-of-memory condition in the memory corresponding to the target application. A second process is created by using the first process corresponding to the first process identifier, where the second process is a child process of the first process and shares the memory corresponding to the target application with the first process. The scheduling group of the second process is adjusted to obtain a third process, where the third process is independent of the first process. The data in the memory is dumped using the third process. By creating the second process and adjusting its scheduling group to obtain the third process, a third process independent of the first process of the target application is obtained. This third process is used to dump the memory data, thereby enabling the dumping of memory snapshot information when an application exception occurs.

Since the third process is independent of the first process, the threads in the first process can be restarted and resumed after a brief freeze (i.e., they can be restarted and resumed after the creation of the second process is complete). It is not necessary to wait for the third process to complete its execution before restarting and resuming the relevant threads in the first process. This reduces the duration of the thread freeze, thereby reducing the duration for which the application's operation is blocked.

Since the third process is independent of the first process of the target application, the operation of the third process does not depend on the operation or state of the first process. Therefore, even if the target application is in a state of freezing and exiting, the third process can still execute the dumping of data in the memory, ensuring that the acquisition of memory snapshot information can be completed when an application exception occurs.

### BRIEF DESCRIPTION OF THE DRAWINGS

In order to clearly explain the technical solutions in the embodiments of the present disclosure, the drawings used in the description of the embodiments will be briefly described below. Obviously, the drawings in the following description are merely some embodiments of the present disclosure. For those of ordinary skill in the art, other drawings may also be obtained based on these drawings without any creative work.
FIG. 1 is a schematic diagram of a scenario of an information acquisition method provided by an embodiment of the present disclosure.
FIG. 2 is a schematic flowchart of an information acquisition method according to an embodiment of the present disclosure.
FIG. 3 is a schematic structural diagram of an information acquisition apparatus according to an embodiment of the present disclosure.
FIG. 4 is another schematic structural diagram of an information acquisition apparatus according to an embodiment of the present disclosure.
FIG. 5 is a schematic structural diagram of an electronic device according to an embodiment of the present disclosure.

### DETAILED DESCRIPTION

The disclosure will now be described in detail with reference to the accompanying drawings and examples. Apparently, the described embodiments are only a part of the embodiments of the present disclosure, not all of the embodiments. All other embodiments obtained by a person of ordinary skill in the art based on the embodiments of the present invention without creative efforts shall fall within the protection scope of the present invention.

Embodiments of the present disclosure provide an information acquisition method, an apparatus, an electronic device, and a computer-readable storage medium. Specifically, embodiments of the present disclosure provide an information acquisition apparatus applicable to an electronic device (terminal device), where the terminal device includes but is not limited to devices such as a desktop computer, a laptop computer, a tablet computer, or a mobile phone.

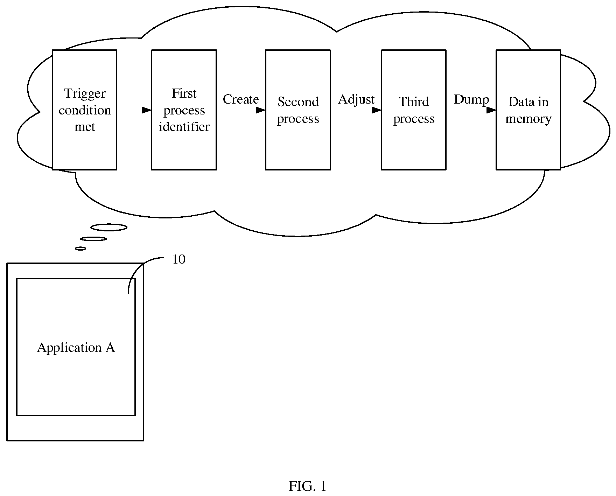

Please refer to FIG. 1. FIG. 1 is a schematic diagram of a scenario where a terminal device executes the information acquisition method provided by an embodiment of the present disclosure. The specific execution process of the information acquisition method by the terminal device is as follows:
If the terminal device 10 detects that a target application on the terminal device 10 meets a preset trigger condition, a first process identifier corresponding to the target application is determined. The trigger condition includes at least one of: the target application lagging, the target application freezing, or an out-of-memory condition in the memory of the target application;
Subsequently, the terminal device 10 creates a second process using a first process corresponding to the first process identifier. The second process is a child process of the first process, and the second process and the first process share the memory of the target application;
Subsequently, the terminal device 10 adjusts a scheduling group of the second process to obtain a third process. The third process is independent of the first process;
Then, the terminal device 10 dumps data in the memory by using the third process.

It can be understood that the memory data includes a memory snapshot file, and the memory snapshot file records the reason for the application exception.

According to embodiments of the present disclosure, a third process independent of the first process of the target application is obtained by creating a second process and adjusting its scheduling group. This third process is used to dump the memory data, thereby enabling the dumping of memory snapshot information when an application exception occurs. Since the third process is independent of the first process, threads in the first process can be resumed after a brief freeze (i.e., they can be resumed after the creation of the second process is complete). It is not necessary to wait for the third process to complete its execution before resuming the relevant threads in the first process. This method reduces the duration of the thread freeze, thereby reducing the duration for which the application's operation is blocked. Since the third process is independent of the first process of the target application, the operation of the third process does not depend on the operation or state of the first process. Therefore, even if the target application is in a state of freezing or exiting, the third process can still execute the dumping of data in the memory, ensuring that the acquisition of memory snapshot information can be completed when an application exception occurs.

Detailed descriptions are provided below respectively. It should be noted that the order of description of the following embodiments does not limit the priority of the embodiments.

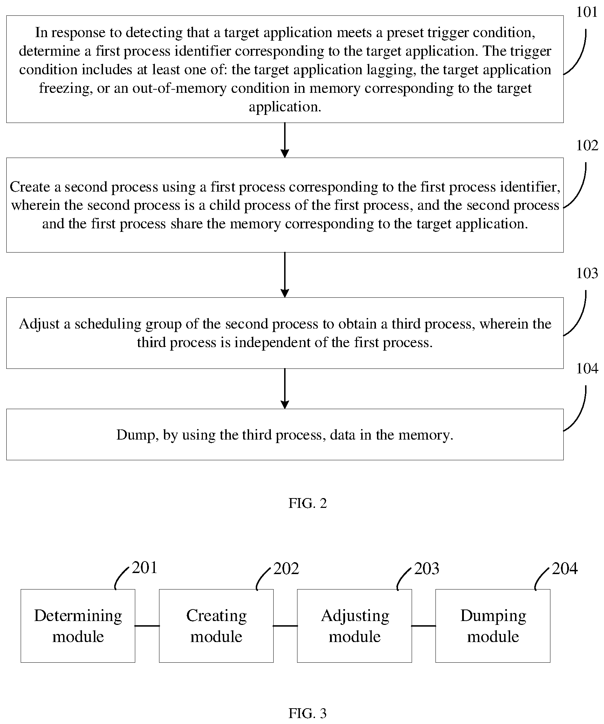

Please refer to FIG. 2. FIG. 2 is a schematic flowchart of an information acquisition method provided by an embodiment of the present disclosure. The specific flow of the information acquisition method is as follows:
101: In response to detecting that a target application meets a preset trigger condition, determine a first process identifier corresponding to the target application.

The preset trigger condition includes at least one of: the target application lagging, the target application freezing, or an out-of-memory condition in a memory corresponding to the target application.

It can be understood that an application is a program with specific functions installed on a terminal device. The target application is the application targeted by the embodiments of the present disclosure, for example, an application that is prone to exceptions such as freezing or lagging during operation on the terminal device, or it can be any application on the terminal device.

Correspondingly, the terminal device can be a mobile phone, a tablet computer, or a desktop computer, etc. For example, when the terminal device is a mobile phone, the target application is an APP installed on the mobile phone.

It can be understood that when an application runs on a terminal device, it corresponds to a process. The execution of this process completes the functions corresponding to the application or responds to operations based on the application.

A process has a unique process identifier. The first process identifier is the identifier of the process corresponding to the target application, and the first process identifier corresponds to the first process of the target application.

It can be understood that the target application lagging, freezing, or having an out-of-memory condition all indicate that the application has an exception. Therefore, by using lagging, freezing, or an out-of-memory condition as the trigger condition, the occurrence of an application exception is effectively used as the trigger condition, that is, the determination of the first process identifier of the target application is triggered when an application exception occurs.

102: Create a second process using a first process corresponding to the first process identifier, wherein the second process is a child process of the first process, and the second process and the first process share the memory corresponding to the target application.

It can be understood that creating the second process using the first process implements the creation of a child process based on a parent process.

The design where the first process and the second process share the memory of the target application allows the second process to also directly operate the memory of the target application, which is conducive to executing the second process to complete the acquisition of the memory data of the target application.

103: Adjust a scheduling group of the second process to obtain a third process, wherein the third process is independent of the first process.

It can be understood that by adjusting the scheduling group of the second process to obtain the third process, the third process is separated from the parent-child process relationship with the first process. This avoids the execution of the third process being dependent on the first process, enhances the flexibility and freedom of the third process's execution, and reduces the dependency of the third process's execution on the first process.

For example, when the first process is in a waiting state, the third process can still continue to execute, meaning the execution of the third process does not need to be triggered by the first process.

104: Dump, by using the third process, data in the memory.

It can be understood that the data in the memory includes a memory snapshot file. This memory snapshot file contains the cause of the application exception. By analyzing this memory snapshot, it is convenient to locate the cause of the application exception. Specifically, a memory snapshot (hprof) file is a binary file generated by a Java Virtual Machine (JVM) and is used to collect runtime information of a Java application. It contains detailed information about the Java heap, such as the number, type, size, and reference relationships of objects. In addition, the hprof file also contains information about threads, classes, methods, etc. By analyzing the hprof file, developers can understand the memory usage, object lifecycle, thread status, and other information of the Java application, thereby helping them diagnose and solve performance problems.

It should be noted that, in embodiments of the present disclosure, the memory includes heap memory, and a heap is a memory management method. Memory management is a very complex matter for an operating system because, firstly, the memory capacity is large, and secondly, memory demands are irregular in terms of time and block size (an operating system runs tens or even hundreds of processes, which may request or release memory at any time, and the size of the requested and released memory blocks is arbitrary). The characteristic of the heap memory management method is its freedom (requesting at any time, releasing at any time, and arbitrary block sizes). Heap memory is managed by a heap manager (a piece of code in the operating system, belonging to the operating system's memory management unit), which then provides an Application Programming Interface (API) (malloc and free) to users (user processes) to use the heap memory.

Correspondingly, when an application experiences an exception, such as lagging or freezing, it is usually caused by an out-of-memory (OOM) condition in the heap memory. Therefore, acquiring the snapshot data of this memory helps in analyzing the cause of the application exception.

It can be understood that since a parent-child process relationship does not exist between the third process and the first process, the third process can execute independently, its execution is not affected by the first process, and the execution of the third process does not affect the first process. Also, since the third process is a process obtained after adjusting the scheduling group of the second process, the third process can process the memory and obtain the memory snapshot data, ensuring the acquisition of the memory snapshot data.

For example, when the target application exits due to an exception, the first process terminates. At this time, the third process can still be used to retrieve the snapshot data from the memory of the target application, thereby enabling the analysis of the exception.

At the same time, since the third process is independent of the first process, the first process does not need to wait for the execution of the third process. Therefore, the blockage of the application's operation due to the acquisition of memory snapshot data can be greatly reduced.

In summary, according to embodiments of the present disclosure, a third process that is independent of the first process of the target application may be obtained by creating a second process and adjusting its scheduling group. This third process is used to dump the memory data, thereby enabling the dumping of memory snapshot information when an application exception occurs. Since the third process is independent of the first process, threads in the first process can be resumed after a brief freeze (i.e., they can be resumed after the creation of the second process is complete). It is not necessary to wait for the third process to complete its execution before resuming the relevant threads in the first process. This reduces the duration of the thread freeze, thereby reducing the duration for which the application's operation is blocked. Since the third process is independent of the first process of the target application, the operation of the third process does not depend on the operation or state of the first process. Therefore, even if the target application is in a state of freezing and exiting, the third process can still execute the dumping of data in the memory, ensuring that the acquisition of memory snapshot information can be completed when an application exception occurs.

Optionally, since processes are managed by control groups, i.e., each process belongs to its control group, the scheduling group of a process can be adjusted by adjusting the control group to which the process belongs. That is, optionally, in some embodiments of the present disclosure, the step of "adjusting a scheduling group of the second process to obtain a third process" may include:

adjusting the second process from a first control group to a second control group to obtain the third process, wherein the first control group is a control group corresponding to the first process.

Control groups may also be referred to as Cgroups (control groups). A control group is a set of processes partitioned according to some criteria. Resource control in Cgroups is implemented on a per-control-group basis. A process can join a control group or be migrated from one process group to another. The processes in a process group can use the resources allocated by Cgroups on a per-control-group basis and are subject to the limits set by Cgroups on a per-control-group basis.

Correspondingly, the scheduling group of the process can be adjusted by adjusting the control group to which a process belongs, causing the second process to be separated from the parent-child process relationship with the first process. In embodiments of the present disclosure, the second process that is separated from the parent-child process relationship with the first process is referred to as the third process.

Optionally, in some embodiments of the present disclosure, when dumping memory data, to avoid the amount of data in the memory being too large and containing too much data irrelevant to the analysis of the application exception, which would cause the dumping process to be time-consuming and resource-intensive, the data to be dumped can be filtered to retain the snapshot data relevant to the exception analysis for dumping. That is, optionally, in some embodiments of the present disclosure, the step of "dumping, by using the third process, data in the memory" may include:
determining a time point at which the preset trigger condition is met;
determining, based on a preset time interval, a target collection time interval with the time point as a collection reference;
identifying a file located in the target collection time interval in the memory as a target file; and
dumping the target file.

A data collection time interval is determined based on the time point at which the trigger condition is met and a preset time interval. Since this time interval includes the time point and is within a certain time range, it contains the snapshot data of the application exception and filters out other application running data irrelevant to the exception. Therefore, it can not only achieve the acquisition of effective snapshot data but also reduce the amount of data to be dumped, lowering the time and resource consumption of memory snapshot dumping.

Optionally, in embodiments of the present disclosure, since the second process needs to be able to access or process the memory of the target application, the first process can create the second process based on the memory identifier of the target application's memory, so that the created second process can also process the memory of the target application. That is, optionally, in some embodiments of the present disclosure, the step of "creating, by a first process corresponding to the first process identifier, a second process" may include:
creating the second process by using the first process corresponding to the first process identifier according to a memory identifier of the memory.

It can be understood that creating a second process capable of processing the target application's memory ensures that the third process, obtained after adjusting the scheduling group of the second process, can also process the target application's memory, which facilitates the third process in obtaining the memory snapshot file.

Optionally, when the target application meets the trigger condition, to ensure that a valid memory snapshot is obtained, in embodiments of the present disclosure, the currently running threads in the first process are also frozen to facilitate the acquisition of memory snapshot data. That is, optionally, in some embodiments of the present disclosure, before the step of "creating the second process using the first process corresponding to the first process identifier, a second process", the method further includes:
freezing threads of the first process corresponding to the first process identifier.

After the second process is created by the first process corresponding to the first process identifier, the method further includes:
restarting the threads.

In related art, it is necessary to wait for the second process or the third process to complete execution before the threads can be restarted and resumed, that is, the threads can only be restarted after the memory snapshot is obtained. In the embodiments of the present disclosure, however, because the third process is a process independent of the first process, the threads can be restarted as soon as the second process is created. Correspondingly, the thread freeze duration can be reduced, and the blocking of the application's operation can be reduced.

In the embodiments of the present disclosure, the involved freezing and restarting are techniques or concepts in process or thread technology. For example, freezing corresponds to "suspend", and restarting corresponds to "resume".

Optionally, in some embodiments of the present disclosure, after the third process completes the acquisition of the memory snapshot file, the application can also be notified or provided with feedback to inform the application that the dumping of the relevant memory snapshot has been completed. That is, optionally, in some embodiments of the present disclosure, after the step of "dumping, using the third process, data in the memory", the method further includes:
sending, by the third process to the first process, a dump completion notification message, wherein the dump completion notification message is used for notifying the first process that the dumping of the data in the memory is completed; or
if it is detected that the threads of the first process have completed restarting, sending, by the third process to the first process, the dump completion notification message.

By sending the dump completion notification message to the first process, the first process and the target application are informed that the dumping of the memory snapshot information has been completed, and the next step of analyzing the memory snapshot file can be performed.

By sending the dump completion notification message after the threads of the first process have completed restarting, it can be ensured that the first process can receive or obtain the dump completion notification message.

Optionally, in some embodiments of the present disclosure, after the dumped memory data (mainly referring to the memory snapshot file) is obtained, a memory analysis tool can be used to analyze the memory data to obtain the cause of the application exception. That is, optionally, in some embodiments of the present disclosure, after the step of "dumping, using the third process, data in the memory", the method further includes:
calling a memory analysis tool to analyze the dumped file to obtain a memory detection result, wherein the memory detection result includes at least memory usage of each thread in the first process.

In embodiments of the present disclosure, memory analysis tools include the VisualVM analysis tool, the IBM HeapAnalyzer analysis tool, or the Mat analysis tool.

The memory usage of each thread in the first process is obtained by performing analysis to obtain the memory detection result. In summary, embodiments of the present disclosure adjust the process scheduling group by adjusting the control group, determine a target collection time interval based on a time point that meets a trigger condition to filter memory snapshots, and achieve the acquisition of effective memory data. Correspondingly, by creating a second process and adjusting its scheduling group to obtain a third process, a third process independent of the first process of the target application is obtained. This third process is used to dump the memory data, thereby achieving the dumping of memory snapshot information when an application exception occurs.

Since the third process is independent of the first process, the threads in the first process can be restarted and resumed after a brief freeze (that is, can be restarted and resumed after the creation of the second process is complete). It is not necessary to wait for the third process to complete execution before restarting and resuming the relevant threads in the first process. This reduces the thread freeze duration, that is, reduces the application operation blocking duration.

Since the third process is independent of the first process of the target application, the operation of the third process does not depend on the operation or state of the first process. Therefore, even if the target application freezes or exits, the third process can still dump the data in the memory, ensuring that the memory snapshot information can be acquired when an application exception occurs.

To facilitate the implementation of the information acquisition method of the present disclosure, the present disclosure also provides an information acquisition apparatus based on the information acquisition method described above. The terms used in the apparatus description have the same meanings as in the method description, and specific implementation details can be found in the description of the method embodiments.

Referring to FIG. 3, FIG. 3 is a schematic structural diagram of an information acquisition apparatus provided by an embodiment of the present disclosure. Specifically, the information acquisition apparatus may include:
a determining module 201, configured to determine a first process identifier corresponding to a target application in response to detecting that the target application meets a preset trigger condition, wherein the preset trigger condition comprises at least one of: the target application lagging, the target application freezing, or an out-of-memory condition in a memory corresponding to the target application;
a creating module 202, configured to create a second process by using a first process corresponding to the first process identifier, wherein the second process is a child process of the first process, and the second process and the first process share the memory corresponding to the target application;
an adjusting module 203, configured to adjust a scheduling group of the second process to obtain a third process, wherein the third process is independent of the first process; and
a dumping module 204, configured to dump data in the memory by using the third process.

Optionally, in some embodiments of the present disclosure, the adjusting module 203 comprises:
an adjusting unit, configured to adjust the second process from a first control group to a second control group to obtain the third process, wherein the first control group is a control group corresponding to the first process.

In some embodiments of the present disclosure, the dumping module 204 comprises:
a first determining unit, configured to determine a time point at which the preset trigger condition is met;
a second determining unit, configured to determine, based on a preset time interval, a target collection time interval with the time point as a collection reference;
a third determining unit, configured to identify a file located in the target collection time interval in the memory as a target file; and
a dumping unit, configured to dump the target file.

In some embodiments of the present disclosure, the creating module 202 comprises:
a creating unit, configured to create the second process by using the first process corresponding to the first process identifier according to a memory identifier of the memory.

In some embodiments of the present disclosure, the apparatus further comprises an application process control module, the application process control module comprising:
a first processing unit, configured to freeze threads of the first process corresponding to the first process identifier; and
a second processing unit, configured to restart the threads after the second process is created by the first process corresponding to the first process identifier.

In some embodiments of the present disclosure, the apparatus further comprises a sending module, the sending module comprising:
a first sending unit, configured to send, by the third process to the first process, a dump completion notification message, wherein the dump completion notification message is used for notifying the first process that the dumping of the data in the memory is completed; and
a second sending unit, configured to send, by the third process to the first process, the dump completion notification message in response to detecting that the threads of the first process have completed restarting.

In some embodiments of the present disclosure, the apparatus further comprises a memory analysis module, the memory analysis module comprising:
a memory analysis unit, configured to call a memory analysis tool to analyze a dumped file to obtain a memory detection result, wherein the memory detection result comprises at least memory usage of each thread in the first process.

In this embodiment of the present disclosure, first, the determining module 201 determines a first process identifier corresponding to the target application in response to detecting that the target application meets a preset trigger condition, wherein the preset trigger condition comprises at least one of: the target application lagging, the target application freezing, or an out-of-memory condition in a memory corresponding to the target application. Then, the creating module 202 creates a second process by using a first process corresponding to the first process identifier, wherein the second process is a child process of the first process, and the second process and the first process share the memory corresponding to the target application. Subsequently, the adjusting module 203 adjusts the scheduling group of the second process to obtain a third process, wherein the third process is independent of the first process. Then, the dumping module 204 dumps the data in the memory by using the third process.

This embodiment of the present disclosure obtains a third process independent of the first process of the target application by creating a second process and adjusting its scheduling group. This third process is used to dump the memory data, thereby achieving the dumping of memory snapshot information when an application exception occurs.

Since the third process is independent of the first process, the threads in the first process can be restarted and resumed after a brief freeze (that is, can be restarted and resumed after the creation of the second process is complete). It is not necessary to wait for the third process to complete execution before restarting and resuming the relevant threads in the first process. This reduces the thread freeze duration, that is, reduces the application operation blocking duration.

Since the third process is independent of the first process of the target application, the operation of the third process does not depend on the operation or state of the first process. Therefore, even if the target application freezes or exits, the third process can still dump the data in the memory, ensuring that the memory snapshot information can be acquired when an application exception occurs.

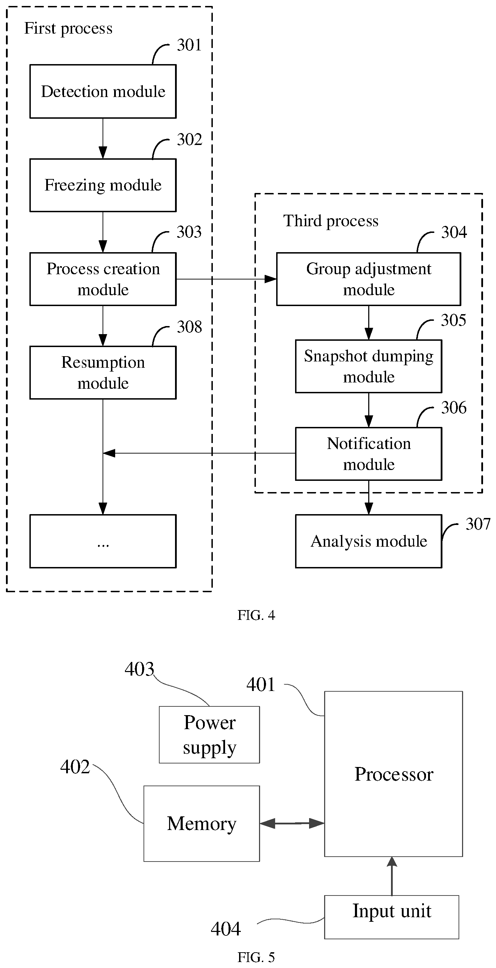

Referring to FIG. 4, FIG. 4 is another schematic structural diagram of an information acquisition apparatus provided by an embodiment of the present disclosure. Specifically, the information acquisition apparatus may be as follows:
a detection module 301, configured to detect whether a target application meets a preset trigger condition;
a freezing module 302, configured to freeze threads in a first process corresponding to the target application in response to detecting that the target application meets the preset trigger condition;
a process creation module 303, configured to create a second process based on the first process of the target application, wherein the second process is a child process of the first process, and the second process and the first process share the memory corresponding to the target application;
a group adjustment module 304, configured to adjust a scheduling group of the second process to obtain a third process, wherein the third process is independent of the first process;
a snapshot dumping module 305, configured to dump a memory snapshot of the target application by using the third process;
a notification module 306, configured to send a dump completion notification message to the first process;
an analysis module 307, configured to analyze the dumped memory snapshot to obtain a memory detection result.

The apparatus may further include a resumption module 308. After the creation module 303 executes, the resumption module 308 is configured to restart and resume the threads in the first process.

In summary, according to this embodiment of the present disclosure, a second process is created through the process creation module 303, and the scheduling group of the second process is adjusted through the group adjustment module 304 to obtain a third process, such that the third process is independent of the first process. When the third process executes, it acquires the memory snapshot file. Because the third process is independent of the first process, the execution of the third process does not depend on the execution state of the first process, and the execution of the third process does not interfere with the execution of the first process, thereby reducing the blocking of the operation of the target application corresponding to the first process.

To obtain a more effective memory snapshot, it is necessary to freeze the threads in the first process. However, in this embodiment of the present disclosure, the acquisition of the memory snapshot does not rely on the first process. Therefore, as soon as the second process is created, the frozen threads in the first process can be restarted and resumed. It is not necessary to wait for the execution of the second process or the third process to end, which reduces the freeze duration of the threads in the first process, that is, reduces the application operation blocking duration.

In addition, the present disclosure also provides an electronic device, as shown in FIG. 5, which is a schematic structural diagram of the electronic device. Specifically:
The electronic device may include a processor 401 with one or more processing cores, a memory 402 with one or more computer-readable storage medium, a power supply 403, and an input unit 404, and so on. A person skilled in the art can understand that the structure of the electronic device shown in FIG. 5 is not a limitation on the electronic device and that the electronic device may include more or fewer components than shown, or combine certain components, or have a different arrangement of components. Wherein:
The processor 401 is the control center of the electronic device, connecting various parts of the entire electronic device by using various interfaces and lines. By running or executing software programs and/or modules stored in the memory 402 and calling data stored in the memory 402, the processor 401 performs various functions of the electronic device and processes data, thereby monitoring the electronic device as a whole. Optionally, the processor 401 may include one or more processing cores. Preferably, the processor 401 may integrate an application processor and a modem processor, wherein the application processor mainly handles the operating system, user interface, and applications, and the modem processor mainly handles wireless communication. It can be understood that the modem processor may also not be integrated into the processor 401.

The memory 402 may be used to store software programs and modules. The processor 401 executes various functions and performs data processing by running the software programs and modules stored in the memory 402. The memory 402 may mainly include a program storage area and a data storage area, where the program storage area may store an operating system and application programs required for at least one function (such as a sound playback function or an image playback function), and the data storage area may store data created based on the use of the electronic device. In addition, the memory 402 may include a high-speed random-access memory, and may also include a non-volatile memory, such as at least one disk storage device, a flash memory device, or another non-volatile solidstate storage device. Correspondingly, the memory 402 may also include a memory controller to provide the processor 401 with access to the memory 402.

The electronic device also includes a power supply 403 that supplies power to various components. Preferably, the power supply 403 may be logically connected to the processor 401 through a power management system, thereby enabling the power management system to manage functions such as charging, discharging, and power consumption. The power supply 403 may also include one or more components such as a DC or AC power supply, a recharging system, a power supply information acquisition circuit, a power converter or inverter, and a power supply status indicator.

The electronic device may also include an input unit 404. The input unit 404 may be used to receive digital or character information and to generate signal inputs from a keyboard, mouse, joystick, optical device, or trackball related to user settings and function control.

Although not shown, the electronic device may also include components such as a display unit, details of which are not described herein. Specifically, in this embodiment, the processor 401 in the electronic device is configured to load an executable file corresponding to a process of one or more applications into the memory 402, and run the application stored in the memory 402, thereby implementing the steps of any of the information acquisition methods provided in the embodiments of the present disclosure.

According to an embodiment of the present disclosure, if it is detected that a target application meets a preset trigger condition, a first process identifier corresponding to the target application is determined. The trigger condition includes the target application lagging, the target application freezing, or an out-of-memory condition occurring in a memory corresponding to the target application. A second process is created by using a first process corresponding to the first process identifier, where the second process is a child process of the first process, and the second process and the first process share the memory corresponding to the target application. A scheduling group of the second process is adjusted to obtain a third process, where the third process is independent of the first process. Data in the memory is then dumped using the third process. By creating the second process and adjusting the scheduling group to obtain the third process, a third process that is independent of the first process of the target application is obtained. This third process is used to dump the memory data, thereby enabling the dumping of memory snapshot information when an application exception occurs.

Since the third process is independent of the first process, threads in the first process can be resumed after a brief freeze (that is, can be resumed after the creation of the second process is complete). It is not necessary to wait for the third process to complete execution before resuming the relevant threads in the first process. This reduces the duration of the thread freeze, that is, it reduces the duration for which the application's operation is blocked.

Since the third process is independent of the first process of the target application, the operation of the third process does not depend on the operation or state of the first process. Therefore, even if the target application freezes or exits, the third process can still dump the data in the memory, ensuring that the memory snapshot information can be acquired when an application exception occurs.

For the specific implementation of the foregoing operations, reference may be made to the preceding embodiments, and details thereof are not described herein again.

A person of ordinary skill in the art will understand that all or part of the steps in the various methods of the foregoing embodiments may be implemented by instructions, or by instructions controlling related hardware. The instructions may be stored in a computer-readable storage medium and loaded and executed by a processor.

Accordingly, the present disclosure provides a computer-readable storage medium on which a computer program is stored. The computer program can be loaded by a processor to execute the steps of any of the information acquisition methods provided by the present disclosure. For the specific implementation of the foregoing operations, reference may be made to the preceding embodiments, and details thereof are not described herein again.

The computer-readable storage medium may include, for example, a Read-Only Memory (ROM), a Random-Access Memory (RAM), a magnetic disk, or an optical disc.

Since the instructions stored in the computer-readable storage medium can execute the steps of any of the information acquisition methods provided by the present disclosure, the beneficial effects achievable by any of the information acquisition methods provided by the present disclosure can also be achieved. For details, reference is made to the preceding embodiments, which are not described herein again.

The foregoing provides a detailed description of an information acquisition method, an apparatus, an electronic device, and a computer-readable storage medium provided by the present disclosure. This document has used specific examples to explain the principles and implementations of the present invention. The description of the above embodiments is intended only to facilitate understanding of the method of the present invention and its core ideas. Furthermore, a person skilled in the art may, based on the ideas of the present invention, make changes to the specific implementations and application scope. In summary, the content of this specification should not be construed as a limitation on the present invention.

It should be noted that in the specific embodiments of the present disclosure, data such as the running status of an application (lagging, freezing), whether the memory corresponding to the application is insufficient, a memory snapshot of the memory corresponding to the application, the time point at which an application operation exception occurs, and the process identifier corresponding to the application may be involved. When the above embodiments of the present disclosure are applied to specific products or technologies, user permission or consent must be obtained, and the collection, use, and processing of related data must comply with the relevant laws, regulations, and standards of the relevant countries and regions.

## Claims

1. An information acquisition method, comprising:
determining, in response to detecting that a target application meets a preset trigger condition, a first process identifier corresponding to the target application, wherein the preset trigger condition comprises at least one of: the target application lagging, the target application freezing, or an out-of-memory condition in a memory corresponding to the target application;
creating a second process based on a first process corresponding to the first process identifier, wherein the second process is a child process of the first process, and the second process and the first process share the memory corresponding to the target application;
adjusting a scheduling group of the second process to obtain a third process, wherein the third process is independent of the first process; and
dumping, using the third process, data in the memory.

2. The information acquisition method according to claim 1, wherein the adjusting the scheduling group of the second process to obtain the third process comprises:
adjusting the second process from a first control group to a second control group to obtain the third process, wherein the first control group is a control group corresponding to the first process.

3. The information acquisition method according to claim 1, wherein the dumping, using the third process, the data in the memory comprises:
determining a time point at which the preset trigger condition is met;
determining, based on a preset time interval, a target collection time interval with the time point as a collection reference;
identifying a file located in the target collection time interval in the memory as a target file; and
dumping the target file.

4. The information acquisition method according to claim 1, wherein the creating the second process based on the first process corresponding to the first process identifier comprises:
creating the second process based on the first process corresponding to the first process identifier according to a memory identifier of the memory.

5. The information acquisition method according to claim 1, wherein before the creating the second process based on the first process corresponding to the first process identifier, the method further comprises:
freezing threads of the first process corresponding to the first process identifier; and
after the creating the second process based on the first process corresponding to the first process identifier, the method further comprises:
restarting the threads.

6. The information acquisition method according to claim 5, wherein after the dumping, using the third process, the data in the memory, the method further comprises:
sending, by the third process to the first process, a dump completion notification message, wherein the dump completion notification message is used for notifying the first process that dumping of the data in the memory is completed; or
sending, by the third process to the first process, the dump completion notification message in response to detecting that the threads of the first process have completed restarting.

7. The information acquisition method according to claim 1, wherein after the dumping, using the third process, the data in the memory, the method further comprises:
calling a memory analysis tool to analyze a dumped file to obtain a memory detection result, wherein the memory detection result comprises at least memory usage of each thread in the first process.

8. The information acquisition method according to claim 1, wherein the creating the second process using the first process corresponding to the first process identifier comprises:
freezing threads in the first process, and creating the second process using the first process corresponding to the first process identifier; and
wherein after the creating the second process using the first process corresponding to the first process identifier, the method further comprises:
resuming the threads in response to detecting that creation of the second process is completed.

9. The information acquisition method according to claim 1, wherein the data in the memory comprises a memory snapshot file.

10. The information acquisition method according to claim 1, wherein a parent-child process relationship does not exist between the third process and the first process.

11. An information acquisition apparatus, comprising:
a determining module, configured to, in response to detecting that a target application meets a preset trigger condition, determine a first process identifier corresponding to the target application, wherein the preset trigger condition comprises at least one of: the target application lagging, the target application freezing, or an out-of-memory condition in a memory corresponding to the target application;
a creating module, configured to create a second process using a first process corresponding to the first process identifier, wherein the second process is a child process of the first process, and the second process and the first process share the memory corresponding to the target application;
an adjusting module, configured to adjust a scheduling group of the second process to obtain a third process, wherein the third process is independent of the first process; and
a dumping module, configured to dump, using the third process, data in the memory.

12. The information acquisition apparatus according to claim 11, wherein the adjusting module comprises:
an adjusting unit, configured to adjust the second process from a first control group to a second control group to obtain the third process, wherein the first control group is a control group corresponding to the first process.

13. The information acquisition apparatus according to claim 11, wherein the dumping module comprises:
a first determining unit, configured to determine a time point at which the preset trigger condition is met;
a second determining unit, configured to determine, based on a preset time interval, a target collection time interval with the time point as a collection reference;
a third determining unit, configured to identify a file located in the target collection time interval in the memory as a target file; and
a dumping unit, configured to dump the target file.

14. The information acquisition apparatus according to claim 11, wherein the creating module comprises:
a creating unit, configured to create the second process using the first process corresponding to the first process identifier according to a memory identifier of the memory.

15. The information acquisition apparatus according to claim 11, wherein the apparatus further comprises an application process control module, the application process control module comprising:
a first processing unit, configured to freeze threads of the first process corresponding to the first process identifier; and
a second processing unit, configured to, after the second process is created using the first process corresponding to the first process identifier, restart the threads.

16. The information acquisition apparatus according to claim 15, wherein the apparatus further comprises a sending module, the sending module comprising:
a first sending unit, configured to send, by the third process to the first process, a dump completion notification message, wherein the dump completion notification message is used for notifying the first process that dumping of the data in the memory is completed; and
a second sending unit, configured to, in response to detecting that the threads of the first process have completed restarting, send, by the third process to the first process, the dump completion notification message.

17. The information acquisition apparatus according to claim 11, wherein the apparatus further comprises a memory analysis module, the memory analysis module comprising:
a memory analysis unit, configured to call a memory analysis tool to analyze a dumped file to obtain a memory detection result, wherein the memory detection result comprises at least memory usage of each thread in the first process.

18. The information acquisition apparatus according to claim 11, wherein the data in the memory comprises a memory snapshot file.

19. An electronic device, comprising a memory, a processor, and a computer program stored on the memory and executable by the processor, wherein when the computer program is executed by the processor, the processor is caused to perform the steps of the information acquisition method according to any one of claims 1-10.

20. A computer-readable storage medium storing a computer program thereon, wherein when the computer program is executed by a processor, the processor is caused to perform the steps of the information acquisition method according to any one of claims 1-10.
